(19) Europäisches Patentamt / European Patent Office / Office européen des brevets

(11) **EP 1 113 634 B1**

(12) **FASCICULE DE BREVET EUROPEEN**

(45) Date de publication et mention
de la délivrance du brevet:
**02.05.2007 Bulletin 2007/18**

(51) Int Cl.:
***H04L 25/02*** *(2006.01)*

(21) Numéro de dépôt: **00403584.6**

(22) Date de dépôt: **18.12.2000**

(54) **Méthode d'estimation d'un canal de transmission**

Verfahren zur Übertragungskanalschätzung

Method for transmission channel estimation

(84) Etats contractants désignés:
**AT BE CH CY DE DK ES FI FR GB GR IE IT LI LU MC NL PT SE TR**

(30) Priorité: **30.12.1999 FR 9916849**

(43) Date de publication de la demande:
**04.07.2001 Bulletin 2001/27**

(73) Titulaire: **Mitsubishi Electric Information Technology Centre Europe B.V.**
**1119 NS Schiphol Rijk (NL)**

(72) Inventeurs:
• **Rudolf, Marian**
**35700 Rennes (FR)**
• **Jechoux, Bruno**
**35700 Rennes (FR)**

(74) Mandataire: **Maillet, Alain**
**Cabinet le Guen & Maillet,**
**5, Place Newquay,**
**B.P. 70250**
**35802 Dinard Cedex (FR)**

(56) Documents cités:
**EP-A- 0 379 609 EP-A- 0 598 655**

• **FOSTER S: "Impulse response measurement using Golay codes" ICASSP 86 PROCEEDINGS. IEEE-IECEJ-ASJ INTERNATIONAL CONFERENCE ON ACOUSTICS, SPEECH AND SIGNAL PROCESSING (CAT. NO.86CH2243-4), 7 - 11 avril 1986, pages 929-932 vol.2, XP000946259 New York, NY, USA, IEEE, USA**
• **TELLAMBURA C ET AL: "Channel estimation using aperiodic binary sequences" IEEE COMMUNICATIONS LETTERS, vol. 2, no. 5, mai 1998 (1998-05), pages 140-142, XP002148288 New York, NY, USA ISSN: 1089-7798**
• **BRAUN V: "On impulse response measurement techniques for linear tape recording channels" CONFERENCE RECORD (CAT. NO.96CH35942), PROCEEDINGS OF GLOBECOM'96. 1996 IEEE GLOBAL TELECOMMUNICATIONS CONFERENCE, 18 - 22 novembre 1996, pages 963-967 vol.2, XP002148289 New York, NY, USA ISBN: 0-7803-3336-5**
• **FRANK R L: "Polyphase complementary codes" IEEE TRANSACTIONS ON INFORMATION THEORY, vol. IT-26, no. 6, novembre 1980 (1980-11), pages 641-647, XP000946245 New York, NY, USA ISSN: 0018-9448**

**Description**

La présente invention concerne une méthode d'estimation d'un canal de transmission ou de télécommunication qui utilise des séquences complémentaires. La méthode a pour résultat, soit d'obtenir une estimation optimale de la phase et de l'atténuation dans le cas d'un canal à un seul trajet si le temps d'arrivée du signal est connu, soit d'obtenir une estimation très performante des retards, des phases et des atténuations des différents trajets dans le cas d'un canal à trajets multiples. La méthode permet également d'obtenir une estimation dans le cas d'un canal dont on ne peut pas discerner les différents trajets ou dans le cas d'un canal à trajets multiples dont l'un des trajets est très puissant par rapport à tous les autres, si encore le temps d'arrivée du signal est connu.

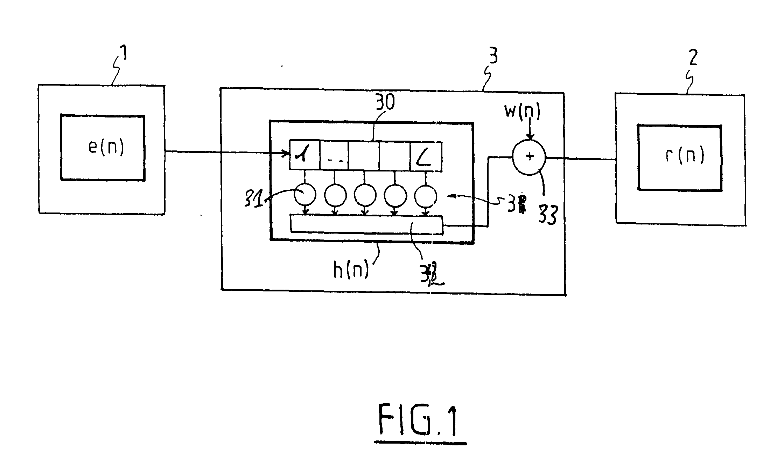

Dans un système de télécommunication, les informations circulent entre des émetteurs et des récepteurs par l'intermédiaire de canaux. A ce sujet, la Fig. 1 illustre un modèle discret dans le temps de la chaîne de transmission entre un émetteur 1 et un récepteur 2 par l'intermédiaire d'un canal de transmission 3. D'une manière générale, les canaux de transmissions peuvent correspondre à différents supports physiques, radioélectriques, filaires, optiques, etc., et à différents environnements, communications fixes ou mobiles, satellites, câbles sous-marins, etc.

Du fait des réflexions multiples dont peuvent être l'objet les ondes émises par l'émetteur 1, le canal 3 est un canal multi-trajets qui est généralement modélisé comme l'indique la Fig. 1. Il est alors considéré être un registre à décalage 30 comportant $L$ cellules en série (référencées par un indice $k$ pouvant prendre les valeurs comprises entre 1 et $L$) et dont les contenus sont décalés vers la droite de la Fig. 1 à chaque arrivée d'un symbole à son entrée. La sortie de chaque cellule d'indice $k$ est appliquée à un filtre 31 représentatif de la perturbation subie par cette sortie et introduisant une atténuation de l'amplitude $a_k$, un déphasage $a_k$ et un retard $r_k$. Les sorties des filtres 31 sont sommées dans un sommateur 32. La réponse impulsionnelle globale ainsi obtenue est notée $h(n)$.

La sortie du sommateur 32 est appliquée à l'entrée d'un additionneur 33 qui reçoit, par ailleurs, un signal aléatoire, modélisé par un bruit blanc gaussien, $w(n)$ qui correspond au bruit thermique qui est présent dans le système de télécommunication.

A la Fig. 1, on a utilisé, dans le canal 3, la mention $h(n)$ pour le registre 30, les filtres 32 et le sommateur 33, suivi d'un additionneur qui ajoute le bruit $w(n)$.

On comprendra que, si l'émetteur 1 émet le signal $e(n)$, le signal reçu $r(n)$, dans le récepteur 2, est donc :

$$r(n) = e(n) * h(n) + w(n)$$

$$= e(n) * \sum_{k=1}^{L} a_k \delta(n - r_k) e^{j\alpha_k} + w(n)$$

$$= \sum_{k=1}^{L} a_k e(n - r_k) e^{j\alpha_k} + w(n)$$

Dans ces expressions, $h(n) = \sum_{k=1}^{L} a_k \delta(n - r_k) e^{j\alpha_k}$ dénote la réponse impulsionnelle du canal, $\delta(n)$ étant l'impulsion de Dirac. L'opérateur * désigne le produit de convolution, défini par la relation suivante :

$$c(n) = a(n) * b(n) = \sum_{m=-\infty}^{+\infty} a(m) \cdot b(n - m)$$

Il est donc en général nécessaire de déterminer les caractéristiques du canal 3, à un instant donné, afin de contrecarrer la distorsion induite du signal émis $e(n)$. Pour obtenir une estimation de $h(n)$, c'est-à-dire des coefficients $a_k$, $r_k$ et $a_k$ du modèle du canal 3, il faut répéter cette opération à une fréquence plus ou moins grande en fonction de la rapidité avec laquelle les caractéristiques du canal évoluent.

Une méthode répandue d'estimation du canal consiste à faire émettre, par l'émetteur 1, des signaux $e(n)$ prédéterminés et connus du récepteur 2 et à comparer les signaux reçus $r(n)$ dans le récepteur 2, au moyen d'une corrélation périodique ou apériodique, avec ceux qui y sont attendus pour en déduire les caractéristiques du canal. La corrélation apériodique de deux signaux de longueur N a une longueur totale 2N-1 et s'exprime, à partir du produit de convolution, par la relation:

$$\varphi_{a,b}(n) = a^*(-n) * b(n) = \sum_{m=0}^{N-1} a(m) \cdot b(m+n)^{(1)} \quad , [m] = 0, 1, \ldots, N\text{-}1$$

pour deux signaux $a(n)$ et $b(n)$ de longueur finie N, où l'opérateur * dénote l'opération conjuguée complexe.

La corrélation du signal reçu $r(n)$ avec le signal émis $e(n)$ connu se traduit par :

$$r(n) * e^*(-n) = [e(n) * h(n) + w(n)] * e^*(-n)$$
$$\varphi_{e,r}(n) = \varphi_{e,e^*h}(n) + \varphi_{e,w}(n)$$
$$= \varphi_{e,e}(n) * h(n) + \varphi_{e,w}(n)$$

Le résultat de l'opération de corrélation constitue l'estimé de la réponse impulsionnelle du canal ; la qualité ou la précision de l'estimé est d'autant meilleure que $\varphi_{e,r}(n)$ tend vers $h(n)$. Celle-ci est donc directement dépendante du choix de la séquence émise $e(n)$: pour optimiser la procédure d'estimation, le signal $e(n)$ doit être choisi de manière que $\varphi_{e,e}(n)$ tende vers $k \cdot \delta(n)$, $k$ étant un nombre réel, et que $\varphi_{e,w}(n)/\varphi_{e,e}(n)$ tende vers 0. En effet, dans ce cas, l'estimé du canal devient :

$$\varphi_{e,r}(n) = k \cdot \delta(n) * h(n) + \varphi_{e,w}(n)$$
$$= k \cdot h(n) + \varphi_{e,w}(n)$$

$$\varphi_{e,r}(n) \approx k \cdot h(n)$$

Il a été démontré qu'il n'existe pas de séquence unique pour laquelle la fonction d'auto-corrélation apériodique est égale à $\varphi_{e,e}(n), k.\delta(n)$.

Un objet de la présente invention consiste à utiliser des paires de séquences complémentaires qui ont la propriété que la somme de leurs auto-corrélations est une fonction de Dirac parfaite. Soit $s(n)$ et $g(n)$, $n = 0,1,\ldots, N\text{-}1$ une paire de séquences complémentaires:

$$\varphi_{s,s}(n) + \varphi_{g,g}(n) = k \cdot \delta(n) \qquad\qquad (1)$$

Plusieurs procédés sont connus dans la littérature pour construire de telles séquences complémentaires : séquences complémentaires de Golay, séquences complémentaires polyphases, séquences de Welti, etc. A titre d'information, on pourra se reporter, à ce sujet, aux documents techniques suivants, qui traitent de l'introduction aux séquences complémentaires et, en particulier, aux séquences complémentaires de Golay ainsi qu'à un corrélateur de Golay :

1) « On aperiodic and periodic complementary sequences » par Feng K., Shiue P . J.-S., et Xiang Q., publié dans la revue technique IEEE Transactions on Information Theory, Vol. 45, n° 1, Janvier 1999,
2) « Korrelationssignale » par Lüke H.-D., publié dans la revue technique ISBN 3-540-54579-4, Springer-Verlag Heidelberg New York, 1992,
3) « Polyphase Complementary Codes » par R. L. Frank, publié dans la revue technique IEEE Transactions on Information Theory, Novembre 1980, Vol. IT26, n° 6,
4) « Multiphase Complementary Codes » par R. Sivaswamy, publié dans la revue technique IEEE Transactions on Information Theory, septembre 1978, Vol. IT-24, n° 5,

5) « Efficient pulse compressor for Golay complementary sequences » par S.Z. Budisin, publié dans la revue technique Electronics Letters, Vol. 27, n° 3, janvier 1991,

6) « Complementary Series » par M.J. Golay, publié dans la revue technique IRE Trans ; on Information Theory » Vol. IT-7, avril 1961,

7) « Efficient Golay Correlator » par B.M. Popovic, publié dans la revue technique IEEE Electronics Letters, Vol. 35, n° 17, août 1999.

On pourra aussi se reporter aux descriptions des documents US-A-3 800 248, US-A-4 743 753, US-A-4 968 880, US-A-5 729 612, US-A-5 841 813, US-A-5 862 182 et US-A-5 961 463.

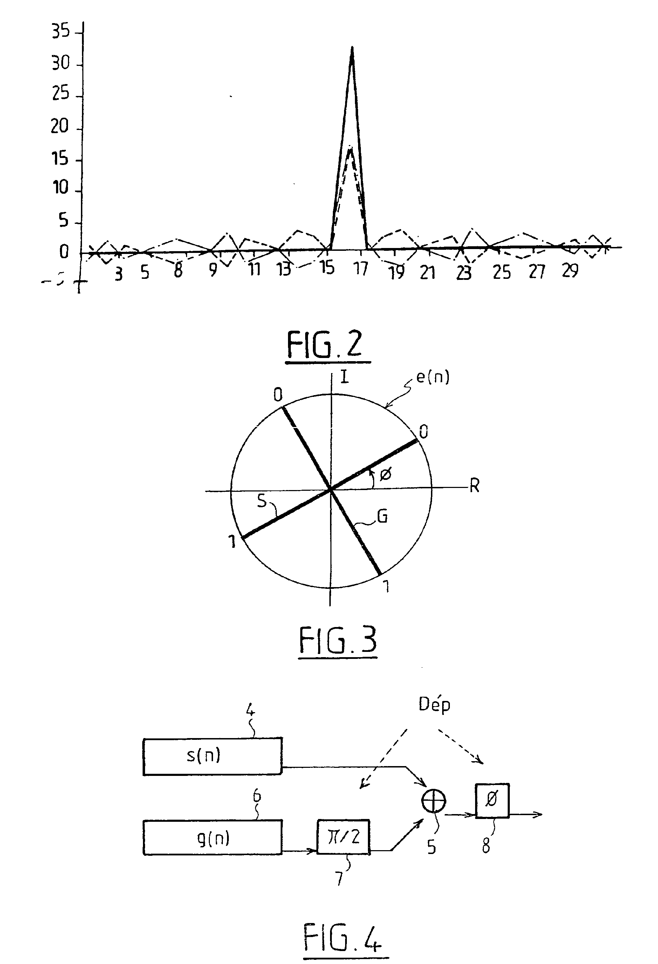

La propriété de séquences complémentaires d'avoir une somme d'auto-corrélations parfaite est illustrée à la Fig. 2, en prenant, à titre d'exemple, une paire de séquences complémentaires de Golay de longueur N = 16 bits.

A la Fig. 2, sont portés en abscisses les décalages temporels par rapport à la synchronisation parfaite. Les décalages possibles sont numérotés de 1 à 31 pour la paire de séquences $s(n)$ et $g(n)$, et en ordonnées les corrélations de -5 à +35. La courbe en traits tirets correspond à l'auto-corrélation $\varphi_{s,s}(n)$ de la séquence $s(n)$; la courbe en traits mixtes à l'auto-corrélation $\varphi_{g,g}(n)$ de la séquence $g(n)$; et la courbe en trait plein la somme des auto-corrélations $\varphi_{s,s}(n)$ et $\varphi_{g,g}(n)$. On peut voir que la courbe en trait plein se confond avec l'axe des abscisses entre les points 0 et 15 et les points 17 et 31, mais qu'elle correspond pratiquement à une fonction de Dirac entre les points 15 à 17.

Les propriétés d'auto-corrélation théoriquement parfaites de ces séquences complémentaires ne sont néanmoins exploitables que si leur transmission peut être assurée d'une manière telle que l'occurrence d'inter-corrélations $\varphi_{s,g}(n)$ et/ou $\varphi_{g,s}(n)$ est évitée.

Suivant une caractéristique de l'invention, il est prévu une méthode d'estimation d'un canal de transmission ou de télécommunication dans laquelle on utilise un signal composite de séquences complémentaires et dans laquelle on transmet une paire de séquences complémentaires $s(n)$ et $g(n)$ après les avoir multiplexées en phase .

Suivant une autre caractéristique de l'invention, il est prévu une méthode de construction du signal composite à partir d'une paire de séquences complémentaires polyphases $s(n)$ et $g(n)$ qui sont multiplexées en phase, cette méthode permettant d'exploiter la propriété $\varphi_{s,s}(n) + \varphi_{g,g}(n)$ mentionnée dans la relation (1) ci-dessus.

Suivant une autre caractéristique, le signal composite est constitué de deux séquences $s(n)$ et $g(n)$ complémentaires polyphases émises avec un déphasage entre elles de 90°, c'est-à-dire que le signal composite émis $e(n)$ est de la forme de la relation (2) ci-dessous :

$$e(n) = e^{j\phi} \cdot \left( s(n) + j \cdot g(n) \right) \qquad (2)$$

avec un déphasage initial $\phi$ fixe et connu.

Dans le cas des séquences complémentaires $s(n)$ et $g(n)$ binaires, avec un nombre de phases $P$ égal à 2, c'est-à-dire le cas de séquences complémentaires de Golay, le signal émis $e(n)$ est de la forme d'un signal 2P-PSK, soit 4-PSK, comme le montre la Fig. 3 dans le plan complexe. La Fig. 3 représente, dans le plan complexe (R,I), le signal composite émis $e(n)$ dont les valeurs 0 ou 1 prises par chaque composante $s(n)$, $g(n)$ sont respectivement représentées par les extrémités d'un segment correspondant S et G. Les segments S et G sont déphasés l'un par rapport à l'autre de $\Pi/2$.

Dans le cas plus général de séquences complémentaires polyphases avec un nombre de phases $P$ supérieur à 2, le signal émis $e(n)$ prend la forme d'un signal (2P)-PSK.

Suivant une autre caractéristique, il est prévu un dispositif, destiné à la génération du signal composite suivant la relation (2), qui comprend un premier générateur capable de générer la première séquence $s(n)$, avec n variant de 0 à N-1, dont la sortie est reliée à la première entrée d'un additionneur, et un second générateur capable de générer la seconde séquence $g(n)$, avec n variant de 0 à N-1, dont la sortie est reliée à l'entrée d'un premier circuit déphaseur de 90° dont la sortie est reliée à la seconde entrée de l'additionneur, la sortie de l'additionneur étant reliée à l'entrée d'un second circuit déphaseur par $\phi$ qui délivre le signal composite.

Les caractéristiques de la présente invention mentionnées ci-dessus, ainsi que d'autres, apparaîtront plus clairement à la lecture de la description d'exemples de réalisation, ladite description étant faite en relation avec les dessins joints, parmi lesquels :

la Fig. 1 est un schéma connu d'un modèle discret d'un canal de transmission,

la Fig. 2 est une courbe connue illustrant l'auto-corrélation de deux séquences complémentaires de Golay et la somme de leurs auto-corrélations,

la Fig. 3 illustre une méthode de multiplexage en phase de deux séquences complémentaires, suivant l'invention,

la Fig. 4 est le schéma d'un exemple de réalisation de dispositif prévu pour engendrer la séquence composite de l'invention,

la Fig. 5 est un bloc-diagramme montrant un circuit de traitement par corrélation, monté en série avec un dispositif d'estimation de canal, le circuit de traitement recevant le signal r(n),

la Fig. 6 est un bloc-diagramme montrant un exemple de réalisation d'un dispositif d'estimation de canal mono-trajet, et

la Fig. 7 est un bloc-diagramme montrant un autre exemple de réalisation d'un dispositif d'estimation de canal multi-trajets.

Le dispositif montré à la Fig. 4 est destiné à engendrer le signal composite suivant la relation (2), c'est-à-dire :

$$e(n) = e^{j\phi} \cdot \left(s(n) + j \cdot g(n)\right) \qquad (2)$$

Ce dispositif comprend un premier générateur 4 capable de générer la première séquence s(n), avec n variant de 0 à N-1, dont la sortie est reliée à la première entrée d'un additionneur 5, et un second générateur 6 capable de générer la seconde séquence g(n), avec n variant de 0 à N-1, dont la sortie est reliée à l'entrée d'un premier circuit déphaseur 7, apportant un déphasage de 90°, dont la sortie est reliée à la seconde entrée de l'additionneur 5, la sortie de l'additionneur 5 étant reliée à l'entrée d'un second circuit déphaseur 8 qui apporte le déphasage $\phi$ et qui délivre le signal composite e(n).

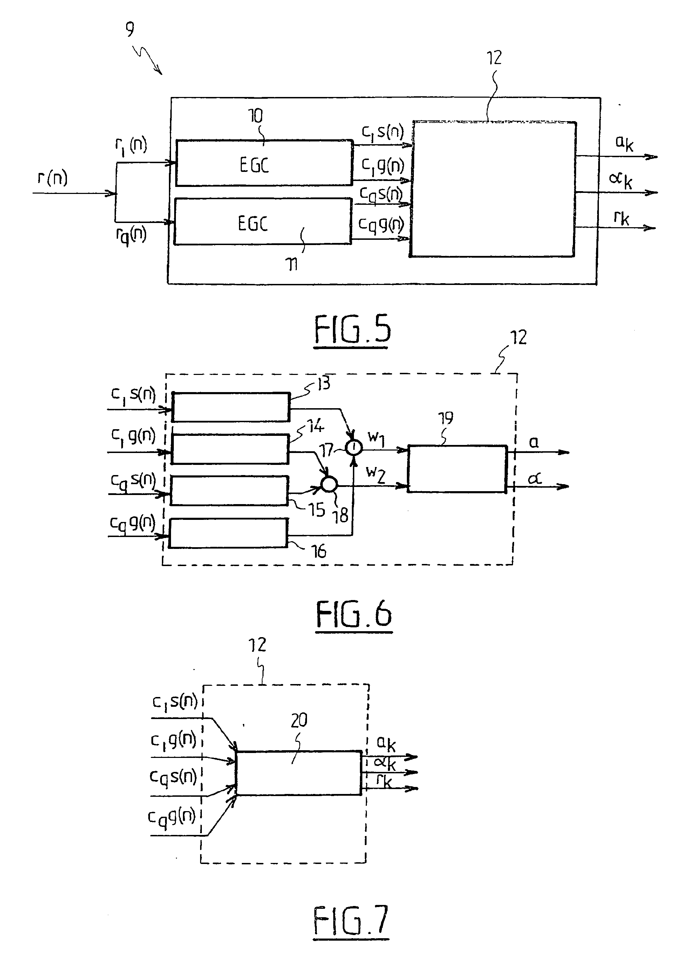

La Fig. 5 montre la structure générale d'un circuit de traitement de signal 9 à l'entrée duquel est appliqué le signal r(n) reçu dans le récepteur 2, Fig. 1, en provenance du canal de transmission 3.

Au passage dans un canal multi-trajets dont la réponse impulsionnelle globale est :

$$h(n) = \sum_{k=1}^{L} a_k \delta(n - r_k) e^{j\alpha_k}$$

le signal reçu r(n) devient :

$$r(n) = \sum_{k=1}^{L} a_k \cdot e^{j\alpha_k} \cdot e(n - r_k) = \sum_{k=1}^{L} a_k \cdot e^{j(\alpha_k + \phi)} \cdot \left(s(n - r_k) + j \cdot g(n - r_k)\right) = r_I(n) + j \cdot r_Q(n)$$

Les parties réelles et imaginaires du signal reçu r(n) s'expriment de la façon suivante :

$$
\begin{aligned}
r_I(n) &= Re\left\{ \sum_{k=1}^{L} a_k \cdot \left(\cos(\alpha_k + \phi) + j \cdot \sin(\alpha_k + \phi)\right) \cdot \left(s(n - r_k) + j \cdot g(n - r_k)\right) \right\} \\
&= \sum_{k=1}^{L} \left(a_k \cdot \cos(\alpha_k + \phi) \cdot s(n - r_k) - a_k \cdot \sin(\alpha_k + \phi) \cdot g(n - r_k)\right) \\
r_Q(n) &= Im\left\{ \sum_{k=1}^{L} a_k \cdot \left(\cos(\alpha_k + \phi) + j \cdot \sin(\alpha_k + \phi)\right) \cdot \left(s(n - r_k) + j \cdot g(n - r_k)\right) \right\} \\
&= \sum_{k=1}^{L} \left(a_k \cdot \sin(\alpha_k + \phi) \cdot s(n - r_k) + a_k \cdot \cos(\alpha_k + \phi) \cdot g(n - r_k)\right)
\end{aligned}
\qquad (3)
$$

Le circuit de traitement 9 se compose de deux corrélateurs 10 et 11 et d'un dispositif d'estimation 12. L'entrée du circuit de traitement 9 reçoit le signal r(n) et en applique la partie réelle $r_I(n)$ au corrélateur 10, qui procède séparément à la corrélation avec les deux séquences *s(n)* et *g(n)*, et la partie imaginaire $r_Q(n)$ au corrélateur 11, qui procède de même à la corrélation avec les deux séquences *s(n)* et *g(n)*.

On obtient alors aux sorties respectives des corrélateurs 10 et 11 des signaux qui contiennent les contributions des auto-corrélations de *s(n)* et *g(n)* et les contributions de leurs inter-correlations, et qui sont mentionnés ci-dessous :

$$c_I^s(n) = \sum_{k=1}^{L} \left( a_k \cdot \cos(\alpha_k + \phi) \cdot \varphi_{s,s}(n - r_k) - a_k \cdot \sin(\alpha_k + \phi) \cdot \varphi_{g,s}(n - r_k) \right)$$

$$c_I^g(n) = \sum_{k=1}^{L} \left( a_k \cdot \cos(\alpha_k + \phi) \cdot \varphi_{s,g}(n - r_k) - a_k \cdot \sin(\alpha_k + \phi) \cdot \varphi_{g,g}(n - r_k) \right)$$

$$(4)$$

$$c_Q^s(n) = \sum_{k=1}^{L} \left( a_k \cdot \sin(\alpha_k + \phi) \cdot \varphi_{s,s}(n - r_k) + a_k \cdot \cos(\alpha_k + \phi) \cdot \varphi_{g,s}(n - r_k) \right)$$

$$c_Q^g(n) = \sum_{k=1}^{L} \left( a_k \cdot \sin(\alpha_k + \phi) \cdot \varphi_{s,g}(n - r_k) + a_k \cdot \cos(\alpha_k + \phi) \cdot \varphi_{g,g}(n - r_k) \right)$$

dont les deux premiers $c_I^s(n)$ et $c_I^g(n)$ sont délivrés par le corrélateur 10 et dont les deux derniers $c_Q^s(n)$ et $c_Q^g(n)$ sont délivrés par le corrélateur 11. Ces quatre signaux sont appliqués au dispositif d'estimation 12.

Dans un premier cas, celui du dispositif 12 de la Fig. 6, on a considéré que le canal de transmission 3 de la Fig. 1 était un canal mono-trajet ou encore un canal de transmission multi-trajets dont on ne peut discerner les différents trajets ou bien un canal multi-trajets dont l'un des trajets est très puissant par rapport à tous les autres trajets. Dans ce cas, le coefficient L utilisé dans la relation du préambule :

$$r(n) = e(n) * h(n) + w(n)$$

$$= e(n) * \sum_{k=1}^{L} a_k \delta(n - r_k) e^{j\alpha_k} + w(n)$$

$$= \sum_{k=1}^{L} a_k e(n - r_k) e^{j\alpha_k} + w(n)$$

est égal à 1, et si le temps d'arrivée $r_1$ est connu, les valeurs de corrélations obtenues par les relations (4) ci-dessus peuvent être combinées de manière simple, ce qui permet de déterminer $a_1$ et $\alpha_1$ par le dispositif d'estimation 12 montré à la Fig. 6.

Le dispositif d'estimation de la Fig. 6 comprend quatre mémoires FiFo 13 à 16, la mémoire 13 recevant le signal $c_I^s(n)$, la mémoire 14 le signal $c_I^g(n)$, la mémoire 15 le signal $c_Q^s(n)$ et la mémoire 16 le signal $c_Q^g(n)$.

Pour chacun de ces signaux, toutes les *2N* - 1 valeurs de corrélation centrées sur le temps d'arrivée connu du signal *r(n)* sont calculées et sauvegardées en mémoire. Les sorties des mémoires 13 et 16 sont respectivement reliées aux deux entrées d'un circuit additionneur 17, tandis que les sorties des mémoires 14 et 15 sont respectivement reliées aux deux entrées d'un circuit soustracteur 18. La sortie du circuit 17 délivre le signal $w_1$, tandis que la sortie du circuit 18 délivre le signal $w_2$. Ces deux signaux sont appliqués à un circuit 19 de calcul de a et de $\alpha$.

En calculant les signaux $w_1$ et $w_2$ comme l'indique les relations (5) ci-dessous :

$$w_1(m) = \left(c_I^s(-m)\right)^* + c_Q^g(m)$$
$$= a_1 \cdot \cos(\alpha_1 + \phi) \cdot \left(\left(\varphi_{s,s}(-m)\right)^* + \varphi_{g.g}(m)\right) + a_1 \cdot \sin(\alpha_1 + \varphi) \cdot \left(\varphi_{g,g}(m) - \left(\varphi_{g.s}(-m)\right)^*\right)$$
$$w_2(m) = \left(c_Q^s(m)\right)^* - c_I^g(-m)$$
$$= a_1 \cdot \sin(\alpha_1 + \phi) \cdot \left(\varphi_{s,s}(m) + \left(\varphi_{g.g}(-m)\right)^*\right) + a_1 \cdot \cos(\alpha_1 + \varphi) \cdot \left(\varphi_{g.s}(m) - \left(\varphi_{s.g}(-m)\right)^*\right)$$

$$(5)$$

où $m = -N + 1, -N + 2,..., N - 2, N - 1$ est choisi comme indice pour les valeurs de corrélation calculées et sauvegardées en mémoire, dans cet ordre.

Avec les deux relations suivantes :

$$\varphi_{s,s}(m) = \varphi_{s,s}^*(-m)$$

$$\varphi_{s,g}(m) = \varphi_{g.s}^*(-m)$$

qui sont valables pour toutes séquences $s(n)$ et $g(n)$, l'équation (5) se simplifie et l'on obtient :

$$w_1(m) = a_1 \cdot \cos(\alpha_1 + \phi) \cdot \left(\varphi_{s,s}(m) + \varphi_{g.g}(m)\right)$$
$$w_2(m) = a_1 \cdot \sin(\alpha_1 + \phi) \cdot \left(\varphi_{s,s}(m) + \varphi_{g.g}(m)\right) \quad (6)$$

Ces deux signaux sont donc de la forme d'un Dirac pondéré par les coefficients du canal, à partir desquels l'atténuation et le déphasage peuvent être obtenus, dans le circuit de calcul 19, par les relations :

$$\alpha_1 = \tan^{-1}\left(\frac{w_2(n-\nu)}{w_1(n-\nu)}\right) - \phi$$

$$a = \frac{w_1(n-\nu)}{\cos(\alpha_1 + \phi)}$$

ou

$$a = \frac{w_2(n-\nu)}{\sin(\alpha_1 + \phi)}$$

avec le déphasage initial $\phi$ connu.

Dans le cas plus général montré à la Fig. 7, les signaux $c_I^s(n)$, $c_I^g(n)$, $c_Q^s(n)$ et $c_Q^g(n)$ sont appliqués respectivement aux quatre entrées d'un circuit 20 qui calcule les différents coefficients $a_k$ et $\alpha_k$, détermine $r_k$ et les délivre à ses sorties. En effet, dans le cas d'un canal de transmission multi-trajets, il n'est pas possible d'éliminer les termes d'inter-corrélation que l'on avait dans les relations (4) ci-dessus. Avec un circuit 20 approprié, il est néanmoins possible d'obtenir des estimations de coefficients du canal de transmission.

En calculant à partir des équations (4),

$$w_1(n) = c_I^s(n) + c_Q^g(n)$$
$$= \sum_{k=1}^{L} \begin{pmatrix} a_k \cdot \cos(\alpha_k + \phi) \cdot (\varphi_{s,s}(n - r_k) + \varphi_{g,g}(n - r_k)) \\ - a_k \cdot \sin(\alpha_k + \phi) \cdot (\varphi_{s,g}(n - r_k) - \varphi_{g,s}(n - r_k)) \end{pmatrix}$$

$$w_2(n) = c_Q^s(n) - c_I^g(n)$$
$$= \sum_{k=1}^{L} \begin{pmatrix} a_k \cdot \sin(\alpha_k + \phi) \cdot (\varphi_{s,s}(n - r_k) + \varphi_{g,g}(n - r_k)) \\ + a_k \cdot \cos(\alpha_k + \phi) \cdot (\varphi_{g,s}(n - r_k) - \varphi_{s,g}(n - r_k)) \end{pmatrix}$$

Les deux signaux sont de la forme d'un Dirac pondéré par les coefficients du canal plus d'autres termes d'inter-corrélation entre les séquences complémentaires $s(n)$ et $g(n)$.

Avec

$$z_1(n) = w_1(n) + w_2(n)$$
$$= \sum_{k=1}^{L} \begin{pmatrix} a_k \cdot (\cos(\alpha_k + \phi) + \sin(\alpha_k + \phi)) \cdot (\varphi_{s,s}(n - r_k) + \varphi_{g,g}(n - r_k)) \\ + a_k \cdot (\sin(\alpha_k + \phi) - \cos(\alpha_k + \phi)) \cdot (\varphi_{g,s}(n - r_k) - \varphi_{s,g}(n - r_k)) \end{pmatrix}$$

$$z_2(n) = w_1^2(n) + w_2^2(n)$$
$$= a_k^2 \cdot (\varphi_{s,s}(n - r_k) + \varphi_{g,g}(n - r_k))^2 + \text{termes secondaires}$$

les retards $r_k$ sont dérivés de manière évidente et les atténuations et les phases peuvent être déterminées par :

$$a_k = \frac{\sqrt{z_2(n)}}{2N}$$

$$\alpha_k = -\left( \cos^{-1}\left( \frac{z_1(n)}{2\sqrt{2} \cdot N} \right) + \phi - \frac{\Pi}{4} \right)$$

## Revendications

1.  Méthode d'estimation d'un canal de transmission ou de télécommunication, au cours de laquelle l'estimée de la réponse impulsionnelle du canal est obtenue, suite à la réception d'un signal composite formé par une paire de séquences $s(n)$, $g(n)$ à partir de la relation suivante :

$$\varphi_{s,s}(n) + \varphi_{g,g}(n) = k.\delta(n)$$

avec $\varphi_{s,s}(n)$ l'auto-corrélation de l'une des séquences $s(n)$ de ladite paire de séquences, $\varphi_{g,g}(n)$ l'auto-corrélation de l'autre séquence $g(n)$ de ladite paire de séquences, $\delta(n)$ l'impulsion de Dirac et $k$ un nombre réel, la méthode étant **caractérisée en ce que** ladite paire de séquences $s(n)$, $g(n)$ est une paire de séquences complémentaires multiplexées en phase.

2. Méthode d'estimation d'un canal de transmission ou de télécommunication suivant la revendication 1, **caractérisée en ce que** ladite paire de séquences $s(n)$, $g(n)$ est une paire de séquences complémentaires polyphases.

3. Méthode d'estimation d'un canal de transmission ou de télécommunication suivant la revendication 1, **caractérisée en ce que** ladite paire de séquences $s(n)$, $g(n)$ est une paire de séquences complémentaires polyphases qui sont déphasées entre elles d'une valeur de 90 degrés, le signal composite émis s'exprimant alors par la relation suivante:

$$e(n) = e^{j\Phi}.(s(n) + j.g(n))$$

avec $\Phi$ une valeur de déphasage initial fixe et connue.

4. Dispositif de génération d'un signal composite destiné à être émis à travers un canal de communication ou de télécommunication en vue de l'estimation de la réponse impulsionnelle dudit canal, ledit signal étant constitué d'une paire de séquences $(s(n), g(n))$, **caractérisé en ce qu'**il comporte

    - un premier générateur (4) et un deuxième générateur (6) capable de générer chacun une séquence de ladite paire de séquence de manière à ce que les deux séquences forment une paire de séquences complémentaires polyphases $(s(n), g(n))$,
    - un premier circuit déphaseur (7) destiné à déphaser de 90 degrés l'une des séquences $(g(n))$ de ladite paire de séquences ainsi générée par rapport à l'autre séquence de ladite paire de séquences,
    - un additionneur (5) destiné à ajouter ladite séquence ainsi déphasée avec l'autre séquence $(s(n))$ de ladite paire de séquences, et
    - un deuxième circuit déphaseur (8) destiné à déphaser d'une valeur initiale fixe et connue $(\Phi)$ le signal obtenu en sortie dudit additionneur (5).

5. Dispositif d'estimation de la réponse impulsionnelle d'un canal de transmission ou de télécommunication au travers duquel est émis un signal formé par une paire de séquences $(s(n), g(n))$ à partir desquelles sont obtenues une partie réelle et une partie imaginaire dudit signal reçu, **caractérisé en ce qu'**il comporte

    - une première mémoire (13) destinée à recevoir un premier signal $\left( c_I^s(n) \right)$ obtenu par corrélation de ladite partie réelle par l'une des séquences de ladite paire de séquences $(s(n))$, dite première séquence,

    - une deuxième mémoire (14) destinée à recevoir un deuxième signal $\left( c_I^g(n) \right)$ obtenu par corrélation de ladite partie réelle par l'autre séquence de ladite paire de séquences $(g(n))$, dite deuxième séquence,

    - une troisième mémoire (15) destinée à recevoir un troisième signal $\left( c_Q^s(n) \right)$ obtenu par corrélation de ladite partie imaginaire avec ladite première séquence,

    - une quatrième mémoire (16) destinée à recevoir un quatrième signal $\left( c_Q^g(n) \right)$ obtenu par la corrélation de ladite partie imaginaire avec ladite deuxième séquence,
    - un circuit additionneur (17) destiné à calculer, d'une part, un signal de somme $(w_1)$ résultant de la somme desdits deuxième et troisième signaux et, d'autre part, un signal de soustraction $(w_2)$ résultant de la soustraction desdits premier et quatrième signaux, et
    - un circuit de calcul de l'estimation de la réponse impulsionnelle destiné à calculer les paramètres ($a$ et $\alpha$) qui définissent ladite réponse impulsionnelle à partir desdits signaux de somme et de soustraction calculées par ledit circuit additionneur.

6. Circuit de traitement destiné à estimer la réponse impulsionnelle d'un canal de transmission ou de télécommunication, ledit circuit de traitement étant relié audit canal de transmission afin de recevoir un signal composite formé d'une paire de séquences complémentaires polyphases $(s(n), g(n))$ qui sont multiplexées en phase, ledit circuit de traitement étant adapté à décomposer ledit signal reçu en une partie réelle $(r_I(n))$ et une partie imaginaire $(r_Q(n))$, **carac-**

**térisé en ce qu'**il comporte

- un premier corrélateur (10) destiné à calculer, d'une part, un premier signal $\left(c_I^s(n)\right)$ représentatif de la corrélation de ladite partie réelle ($r_I(n)$) avec l'une des séquences ($s(n)$) de ladite paire de séquences, dite première séquence, et, d'autre part, un deuxième signal $\left(c_I^g(n)\right)$ représentatif de la corrélation de ladite partie réelle ($r_I(n)$) avec l'autre séquence ($g(n)$) de ladite paire de séquences, dite deuxième séquence,

- un deuxième corrélateur (11) destiné à calculer, d'une part, un troisième signal $\left(c_Q^s(n)\right)$ représentatif de la corrélation de ladite partie imaginaire ($r_Q(n)$) avec ladite première séquence ($s(n)$) et, d'autre part, un quatrième signal $\left(c_Q^g(n)\right)$ représentatif de la corrélation de ladite partie imaginaire ($r_Q(n)$) avec ladite deuxième séquence ($g(n)$), et

- un dispositif d'estimation de la réponse impulsionnelle dudit canal conforme à la revendication 5.

**Claims**

1.  Method of estimating a transmission or telecommunication channel, in the course of which the estimation of the impulse response of the channel is obtained, following the reception of a composite signal formed by a pair of sequences $s(n)$, $g(n)$ starting from the following equation:

$$\varphi_{s,s}(n) + \varphi_{g,g}(n) = k.\delta(n)$$

with $\varphi_{s,s}(n)$ the self-correlation of one of the sequences $s(n)$ of said pair of sequences, $\varphi_{g,g}(n)$ the self-correlation of the other sequence $g(n)$ of said pair of sequences, $\delta(n)$ the Dirac impulse and $k$ an real number, the method being **characterised in that** said pair of sequences $s(n)$, $g(n)$ is a pair of complementary sequences multiplexed in phase.

2.  Method of estimating a transmission or telecommunication channel according to claim 1, **characterised in that** said pair of sequences $s(n)$, $g(n)$ is a pair of complementary polyphase sequences.

3.  Method of estimating a transmission or telecommunication channel according to claim 1, **characterised in that** said pair of sequences $s(n)$, $g(n)$ is a pair of complementary polyphase sequences which are dephased from each other by a value of 90 degrees, the transmitted composite signal then being expressed by the following equation:

$$e(n) = e^{j\Phi}.(s(n) + j.g(n))$$

with $\Phi$ an initial fixed and known dephaser value.

4.  Apparatus for generating a composite signal intended to be transmitted through a communication or telecommunication channel with a view to estimating the impulse response of said channel, said signal being made up of a pair of sequences ($s(n)$, $g(n)$), **characterised in that** it includes

    - a first generator (4) and a second generator (6), each capable of generating one sequence of said sequence pair in such a manner that the two sequences form a pair of complementary polyphase sequences ($s(n)$, $g(n)$),
    - a first dephaser circuit (7), intended to dephase by 90 degrees one of the sequences ($g(n)$) of said pair of sequences thus generated relative to the other sequence of said pair of sequences,
    - an adder (5), intended to add said sequence, thus dephased, to the other sequence ($s(n)$) of said pair of sequences, and
    - a second dephaser circuit (8), intended to dephase by an initial fixed and known value ($\Phi$) the signal obtained at the output of said adder (5).

5.  Apparatus for estimating the impulse response of a transmission or telecommunication channel through which is transmitted a signal formed by a pair of sequences ($s(n)$, $g(n)$), from which are obtained an real part and an imaginary part of said received signal, **characterised in that** it includes

- a first memory (13), intended to receive a first signal $\left(c_I^s\ (n)\right)$ obtained by correlation of said real part by one of the sequences of said pair of sequences($s(n)$), called the first sequence,

- a second memory (14), intended to receive a second signal $\left(c_I^g\ (n)\right)$ obtained by correlation of said real part by the other sequence of said pair of sequences ($g(n)$), called the second sequence,

- a third memory (15), intended to receive a third signal $\left(c_Q^s\ (n)\right)$ obtained by correlation of said imaginary part with said first sequence,

- a fourth memory (16), intended to receive a fourth signal $\left(c_Q^g\ (n)\right)$ obtained by correlation of said imaginary part with said second sequence,
- an adder circuit (17), intended to calculate, on the one hand, a sum signal ($w_1$) resulting from the sum of said second and third signals and, on the other hand, a subtraction signal ($w_2$) resulting from the subtraction of said first and fourth signals, and
- a circuit for calculating the estimation of the impulse response, intended to calculate the parameters ($a$ and $\alpha$) which define said impulse response from said sum and subtraction signals calculated by said adder circuit.

6. Processing circuit intended to estimate the impulse response of a transmission or telecommunication channel, said processing circuit being connected to said transmission channel in order to receive a composite signal formed by a pair of complementary polyphase sequences ($s(n)$, $g(n)$) which are multiplexed in phase, said processing circuit being adapted to decompose said signal received in an real part ($r_I(n)$) and an imaginary part ($r_Q(n)$), **characterised in that** it includes

- a first correlator (10), intended to calculate, on the one hand, a first signal $\left(c_I^s\ (n)\right)$ which is representative of the correlation of said real part ($r_I(n)$) with one of the sequences ($s(n)$) of said pair of sequences, called the first sequence, and, on the other hand, a second signal $\left(c_I^g\ (n)\right)$ which is representative of the correlation of said real part ($r_I(n)$) with the other sequence ($g(n)$) of said pair of sequences, called the second sequence,

- a second correlator (11), intended to calculate, on the one hand, a third signal $\left(c_Q^s\ (n)\right)$ which is representative of the correlation of said imaginary part ($r_Q(n)$), with said first sequence ($s(n)$) and, on the other hand, a fourth signal $\left(c_Q^g\ (n)\right)$, which is representative of the correlation of said imaginary part ($r_Q(n)$) with said second sequence ($g(n)$), and
- an apparatus for estimating the impulse response of said channel according to claim 5.

**Patentansprüche**

1. Verfahren zur Schätzung eines Übertragungskanals oder Nachrichtenübermittlungskanals, während welcher die Bewertung der Impulsantwort des Kanals im Anschluss an den Empfang eines das durch ein Paar von Sequenzen $s(n)$, $g(n)$ gebildeten Signals mittels folgender Relation erhalten wird:

$$\varphi_{s,s}(n) + \varphi_{g,g}(n) = k.\delta(n)$$

wobei $\varphi_{s,s}(n)$ die Autokorrelation einer der Sequenzen $s(n)$ des Paars von Sequenzen ist, $\varphi_{g,g}(n)$ die Autokorrelation der anderen Sequenz $g(n)$ des Paars von Sequenzen, $\delta(n)$ der Dirac-Impuls und $k$ eine reelle Zahl ist, wobei das Verfahren **dadurch gekennzeichnet ist, dass** das Paar von Sequenzen $s(n)$, $g(n)$ ein Paar komplementärer Sequenzen in Phasenmultiplexbetriebsweise ist.

2. Verfahren zur Schätzung eines Übertragungskanals oder Nachrichtenübermittlungskanals nach Anspruch 1, **da-**

**durch gekennzeichnet, dass** das Paar von Sequenzen $s(n)$, $g(n)$ ein mehrphasiges komplementäres Paar von Sequenzen ist.

3. Verfahren zur Schätzung eines Übertragungskanals oder Nachrichtenübermittlungskanals nach Anspruch 1, **dadurch gekennzeichnet, dass** das Paar von Sequenzen $s(n)$, $g(n)$ ein Paar mehrphasiger komplementärer Sequenzen ist, die untereinander um einen Wert von 90° phasenverschoben sind, wobei das gesendete Kanalsignal dann durch folgende Relation ausgedrückt wird:

$$e(n) = e^{j\Phi}.(s(n) + j.g(n))$$

wobei $\Phi$ ein bekannter und fester Initialwert der Phasenverschiebung ist.

4. Vorrichtung zur Erzeugung eines Kanalsignals, das durch einen Übertragungskanal oder Nachrichtenübermittlungskanal gesendet werden soll im Hinblick auf die Schätzung der Impulsantwort des Kanals, wobei das Signal aus einem Paar von Sequenzen ($s(n)$, $g(n)$) gebildet ist, **dadurch gekennzeichnet, dass** es umfasst

- einen ersten Generator (4) und einen zweiten Generator (6), die jeweils eine Sequenz des Paars von Sequenzen in einer Weise erzeugen können, dass die zwei Sequenzen ein Paar mehrphasiger komplementärer Sequenzen ($s(n)$, $g(n)$) bilden,
- eine erste Phasenverschiebungsschaltung (7) die die Phasenverschiebung einer der Sequenzen ($g(n)$) des auf diese Weise erzeugten Paars von Sequenzen in Bezug auf die andere Sequenz des Paars von Sequenzen um 90 Grad bewirken soll,
- einen Addierer (5), der die auf diese Weise phasenverschobene Sequenz mit der anderen Sequenz ($s(n)$) des Paars von Sequenzen ergänzen soll, und
- einen zweiten Phasenverschiebungskreis (8), der die Phasenverschiebung des am Ausgang des Addierers (5) erhaltenen Signals um einen bekannten und festen Initialwert ($\Phi$) bewirken soll.

5. Vorrichtung zur Schätzung der Impulsantwort eines Übertragungskanals oder Nachrichtenübermittlungskanals, durch welchen ein Signal gesendet wird, das durch ein Paar von Sequenzen ($s(n)$, $g(n)$) gebildet ist, mittels welcher ein reeller Teil und ein imaginärer Teil des empfangenen Signals erhalten wird, **dadurch gekennzeichnet, dass** sie umfasst

- einen ersten Speicher (13), der ein erstes Signal $(c_I^s(n))$ empfangen soll, das durch Korrelation des reellen Teils durch eine der als erste Sequenz bezeichneten Sequenzen des Paars von Sequenzen ($s(n)$) erhalten wird,

- einen zweiten Speicher (14), der ein zweites Signal $(c_I^g(n))$ empfangen soll, das durch Korrelation des reellen Teils durch die als zweite Sequenz bezeichnete andere Sequenz des Paars von Sequenzen ($g(n)$) erhalten wird,

- einen dritten Speicher (15), der ein drittes Signal $(c_Q^s(n))$ empfangen soll, das durch Korrelation des imaginären Teils mit der ersten Sequenz erhalten wird,

- einen vierten Speicher (16), der ein viertes Signal $(c_Q^g(n))$ empfangen soll, das durch Korrelation des imaginären Teils mit der zweiten Sequenz erhalten wird,
- eine Addiererschaltung (17), die einerseits ein Summensignal($w_1$), das aus der Summe des zweiten und dritten Signals resultiert, berechnen soll und andererseits ein Subtraktionssignal($w_2$), das aus der Subtraktion des ersten und vierten Signals resultiert, und
- eine Berechnungsschaltung zur Schätzung der Impulsantwort für die Berechnung der Parameter ($a$ und $\alpha$), welche die Impulsantwort mittels der durch die Addiererschaltung berechneten Summen- und Subtraktionssignale definieren.

6. Verarbeitungsschaltung für die Schätzung der Impulsantwort eines Übertragungskanals oder Nachrichtenübermittlungskanals, wobei die Verarbeitungsschaltung mit dem Übertragungskanal verbunden ist, um ein Kanalsignal zu, das aus einem Paar mehrphasiger komplementärer Sequenzen ($s(n)$, $g(n)$) in Phasenmultiplexbetriebsweise gebildet ist, zu empfangen, wobei die Verarbeitungsschaltung angepasst ist, um das empfangene Signal in einen reellen Teil($r_I(n)$) und einen imaginären Teil ($r_Q(n)$) zu aufzugliedern, **dadurch gekennzeichnet, dass** sie umfasst

- einen ersten Korrelator (10), der einerseits ein erstes Signal $\left(c_I^s(n)\right)$ berechnen soll, das repräsentativ für die Korrelation des reellen Teils ($r_I(n)$) mit einer der als erste Sequenz bezeichneten Sequenzen ($s(n)$) des Paars von Sequenzen ist und andererseits ein zweites Signals $\left(c_I^g(n)\right),$ das repräsentativ für die Korrelation des reellen Teils ($r_I(n)$) mit der als zweite Sequenz bezeichneten anderen Sequenz($g(n)$) des Sequenzpaars ist,

- einen zweiten Korrelator (11) der einerseits ein drittes Signal $\left(c_Q^s(n)\right)$ berechnen soll, das repräsentativ für die Korrelation des imaginären Teils ($r_Q(n)$) mit der ersten Sequenz ($s(n)$) ist, und andererseits ein viertes Signal $\left(c_Q^g(n)\right),$ das repräsentativ für die Korrelation des imaginären Teils ($r_Q(n)$) mit der zweiten Sequenz ($g(n)$) ist, und
- eine Vorrichtung zur Schätzung der Impulsantwort des Kanals nach Anspruch 5.

FIG.1

EP 1 113 634 B1

## FIG.2

## FIG.3

## FIG.4

FIG.5

FIG.6

FIG.7